# EUROPEAN PATENT APPLICATION

(11) **EP 3 309 734 A1**
(43) Date of publication of application: **18.04.2018**
(21) Application number: 17195424.1
(22) Date of filing: 09.10.2017
(51) Int. Cl.: G06Q 30/02

(54) **METHOD AND COMPUTING DEVICE FOR OPTIMIZING PLACEMENT OF DIGITAL SIGNAGE CONTENT BASED ON AUDIENCE SEGMENTS**

(30) Priority: 11.10.2016 US 201615290337
(71) Applicant: BroadSign Serv LLC, St-Louis, MO 63141 (US)
(72) Inventor: Mongeau, Bryan, Beaconsfield, H9W 2Y1 (CA)
(74) Representative: Wittmann, Günther

(57) **Abstract**

A method and computing device for optimizing placement of digital signage content based on audience segments associated to digital signage display units. A plurality of audience segments are stored in a memory of a computing device. Characteristics of a digital signage content are received by the computing device. The characteristics of the digital signage content and the plurality of audience segments are processed by a processing unit of the computing device, to identify potential placements for the digital signage content based on the characteristics of the digital signage content and the stored audience segments. The potential placements for the digital signage content are provided for bidding. Bids for the potential placements are received for the digital signage content and processed to identify the optimized placement for the digital signage content based on the characteristics of the digital signage content and bids received

## Description

### TECHNICAL FIELD

The present disclosure relates to the field of digital signage. More specifically, the present disclosure presents a method and computing device for optimizing placement of digital signage content based on audience segments.

### BACKGROUND

Signage refers to graphic designs, such as symbols, emblems, words, etc. In advertising, signage refers to the design or use of signs and symbols to communicate a message, usually for the purpose of marketing. Digital signage is a sub segment of signage and comprises the use of digital signage display units also referred to as digital signage players, such as liquid-crystal displays (LCDs), light-emitting diode (LED) displays, projector screens, etc. Digital signage is a field in great expansion especially for advertising in public venues (e.g. airports, shopping malls, public transports, etc.), because of the potential to advertise dynamically, such as is done with an advertising video.

A media buying platform is generally used for matching a request from an advertisement customer willing to purchase digital signage space, and digital signage display unit(s) having space for displaying digital signage content. The advertisement customer provides a list of criteria to help in the selection of the particular digital signage display unit(s) where the digital signage content will be displayed. For instance, the list of criteria includes types of premises (e.g. airport, train station, shopping mall, etc.), particular localizations (e.g. a specific neighborhood of a city), etc.

In the context of Internet advertising, a similar media buying platform allows the advertisement customer to optimize Internet advertising placement, by providing a precise list of criteria for targeting a particular audience, such as precise demographic criteria (gender, age range, profession, etc.). Targeted advertisement for the Internet is well known in the art, and is based on the collection of information about internet users accessing the Internet via one of the following devices: computer, tablet, smartphone, etc. A profile of each internet user (e.g. a demographic profile) is generated based on the collected information, and advertisements corresponding to the profile of the internet user are presented to the internet user while browsing web sites, watching videos, using social media, etc. Thus, Internet advertising placement can be optimized, by matching the list of criteria provided by the advertisement customer with profiles of internet users browsing the Internet. A particular type of website, a particular type of video, a particular type of social media platform, etc. can be selected for displaying the advertisements, based on the list of criteria provided by the advertisement customer, to entice internet users exposed to the advertisements.

A digital signage display unit does not provide the same level of interaction with its viewers than a website with its visitors, making it more difficult to generate a profile of the viewers of a particular digital signage display unit.

### SUMMARY

According to a first aspect, the present disclosure provides a method for optimizing placement of digital signage content based on audience segments associated to digital signage display units. The method comprises storing in a memory of a computing device audience segments of digital signage display units. The method comprises receiving by the computing device through a customer user interface characteristics of a digital signage content. The method comprises processing by a processing unit of the computing device the characteristics of the digital signage content and the plurality of audience segments to identify potential placements for the digital signage content based on the digital signage characteristics. The method further transmits the potential placements for the digital signage content to the customer user interface allowing a customer to bid on the potential placements from the digital signage content. The method comprises receiving by the computing device bids for the potential placements for the digital signage content. The method also comprises processing the bids for potential placements to identify optimized placements based on the characteristics of the digital signage content and bids received.

According to a second aspect, the present disclosure provides a non-transitory computer program product comprising instructions deliverable via an electronically-readable media, such as storage media and communication links. The instruction, when executed by a processing unit of a computing device, provide for optimizing placement of digital signage content based on audience segments associated to digital signage display units and bids received for potential placements, according to the aforementioned method.

According to a third aspect, the present disclosure provides a computing device adapted for optimizing placement of digital signage content based on audience segments associated to digital signage display units. The computing device comprises memory for storing a plurality of audience segments. The computing device comprises at least one of a communication interface and a user interface for receiving characteristics of a digital signage content. The computing device comprises a processing unit for processing the characteristics of the digital signage content and the plurality of audience segments to identify potential placements of the digital signage content based on the digital signage characteristics. The processing unit further receives bids from a customer user interface for the potential placements of the digital signage content, and processes the bids for the potential placements to identify optimized placements based on the characteristics of the digital signage content and bids received.

In a particular aspect, the identification of the optimized placements takes into consideration a budget, and a strategy for optimizing the budget based on a monetary value of the audience segments. The monetary value of a specific audience segment is determined based on at least of the following: level of accuracy of the specific audience segment, bids received from media buyers for the specific audience segment, and past bids received from media buyers of the specific audience segment.

### BRIEF DESCRIPTION OF THE DRAWINGS

Embodiments of the disclosure will be described by way of example only with reference to the accompanying drawings, in which:
Figure 1 represents a digital signage server interacting with a plurality of digital signage display units;
Figure 2 represents an exemplary digital signage content displayed by one of the digital signage display units of Figure 1;
Figure 3 represents details of a digital signage space platform;
Figure 4 represents an exemplary configuration with a plurality of audience segments corresponding to a plurality of digital signage display units; and
Figures 5 and 6 represent exemplary audience segments having various levels of accuracy and various values per views; and
Figures 7A and 7B represent different methods for optimizing placement of digital signage content based on audience segments associated to digital signage display units and bids received.

### DETAILED DESCRIPTION

The foregoing and other features will become more apparent upon reading of the following non-restrictive description of illustrative embodiments thereof, given by way of example only with reference to the accompanying drawings.

Various aspects of the present disclosure generally address one or more of the problems related to the optimization of placement of a digital signage content based on characteristics of digital signage content, audience segments associated to digital signage display units and bids received. The optimization includes selecting one or more digital signage display units among a plurality of candidate digital signage display units for displaying the digital signage content. The selection takes into consideration audience segments associated to the candidate digital signage display units, as well as other criteria which will be further detailed in the present description.

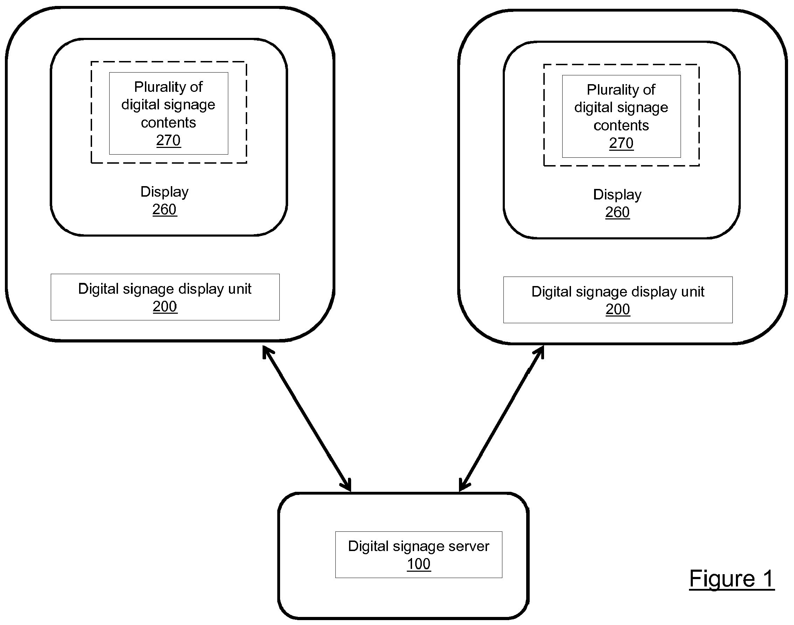

Referring now to Figure 1, a digital signage server 100 and a plurality of digital signage display units 200 controlled by the digital signage server 100 are illustrated.

The interactions between the digital signage server 100 and the digital signage display units 200 under its control are well known in the art. Although only two digital signage display units 200 are represented in Figure 1 for simplification purposes, the digital signage server 100 may control any number of digital signage display units 200. The digital signage server 100 and the controlled digital signage display units 200 may be collocated in the same premises (e.g. an airport or a shopping mall), communicating through a local area network (LAN) such as a Wi-Fi network, an Ethernet network, etc. Alternatively, the digital signage server 100 controls a plurality of remotely located digital signage display units 200 (e.g. located at a plurality of stores of a retail chain), communicating through a wide area network (WAN) such as a cellular network, a broadband fixed network, etc.

For the purpose of clarity, only a single digital signage server 100 is represented in Figure 1, but the digital signage server 100 may consist of a cluster of generic purpose computers or a cluster of high performance specialized computers. The digital signage server 100 comprises the following components not represented in Figure 1 for simplification purposes.

The digital signage server 100 comprises a processing unit capable of executing instructions of computer program(s) for performing the functionalities of the digital signage server 100 (receiving data, processing the received data, generating data, transmitting the generated data, etc.). The digital signage server 100 also comprises memory for storing instructions of the computer program(s) executed by its processing unit, data generated by the execution of the computer program(s), data received via a communication interface, etc.

The digital signage server 100 comprises a communication interface for exchanging data with the digital signage display units 200, and with other computing devices if needed. The communication interface supports at least one of the following communication technologies: fixed broadband, cellular, Ethernet, Wi-Fi, mesh, Bluetooth, a combination thereof, etc. The digital signage server 100 may also comprise a user interface (e.g. a keyboard, a mouse, a touchscreen, etc.), and a display (e.g. a standard screen, a touchscreen, etc.).

The digital signage display unit 200 comprises the following components not represented in Figure 1 for simplification purposes.

The digital signage display unit 200 comprises a processing unit capable of executing instructions of computer program(s) for performing the functionalities of the digital signage display unit 200 (receiving data, processing the received data, generating data, transmitting the generated data, etc.). The digital signage display unit 200 also comprises memory for storing instructions of the computer program(s) executed by its processing unit, data generated by the execution of the computer program(s), data received from a communication interface, etc.

The digital signage display unit 200 comprises a communication interface for exchanging data with the digital signage server 100, and with other computing devices if needed. The communication interface supports at least one of the following communication technologies: fixed broadband, cellular, Ethernet, Wi-Fi, mesh, Bluetooth, a combination thereof, etc. The digital signage display unit 200 may also comprise a user interface (e.g. a touchscreen, etc.).

The digital signage display unit 200 further comprises at least one display 260 (also referred to as a screen in the remainder of the description). A single display 260 is represented in Figure 1. However, the digital signage display unit 200 may comprise several displays 260. The display(s) 260 consists of, without limitations, a liquid-crystal display (LCD), a light-emitting diode (LED) display, an organic light-emitting diode (OLED) display, a projector screen, a combination thereof, etc. Some of the displays 260 may have a large screen, to be visible by a large crowd. The digital signage display unit 200 is usually located in a public venue (e.g. an airport, a shopping mall, elevator, public area, etc.), so that a large number of persons located close to the digital signage display unit 200 can see a content displayed on the corresponding display(s) 260.

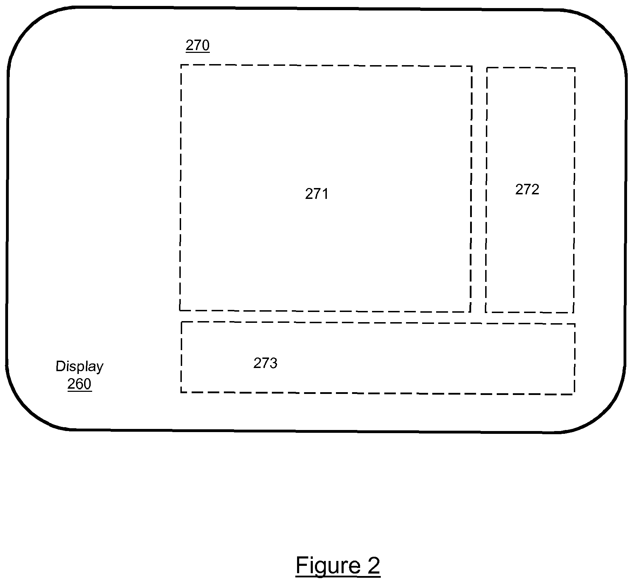

Referring now concurrently to Figures 1 and 2, Figure 2 schematically illustrates the display 260 of one of the digital signage display units 200 of Figure 1. The display 260 may display a plurality of digital signage contents 270: for example, a first digital signage content 271 comprises a larger video image, a second digital signage content 272 comprises a series of static images (such as a local weather report or a Quick Response (QR) code), and a third digital signage content 273 comprises a banner of different series of static images. For any digital signage display unit 200, at any point in time, the plurality of digital signage contents 270 displayed by the corresponding display 260 may include advertising in the form of still or video images, or other contents of interest. The arrangement of the plurality of digital signage contents 270 represented in Figure 2 varies. For instance, different numbers of digital signage contents 270 may be displayed in different orientations. Moreover, the number of digital signage contents 270 and their respective orientations may vary temporally.

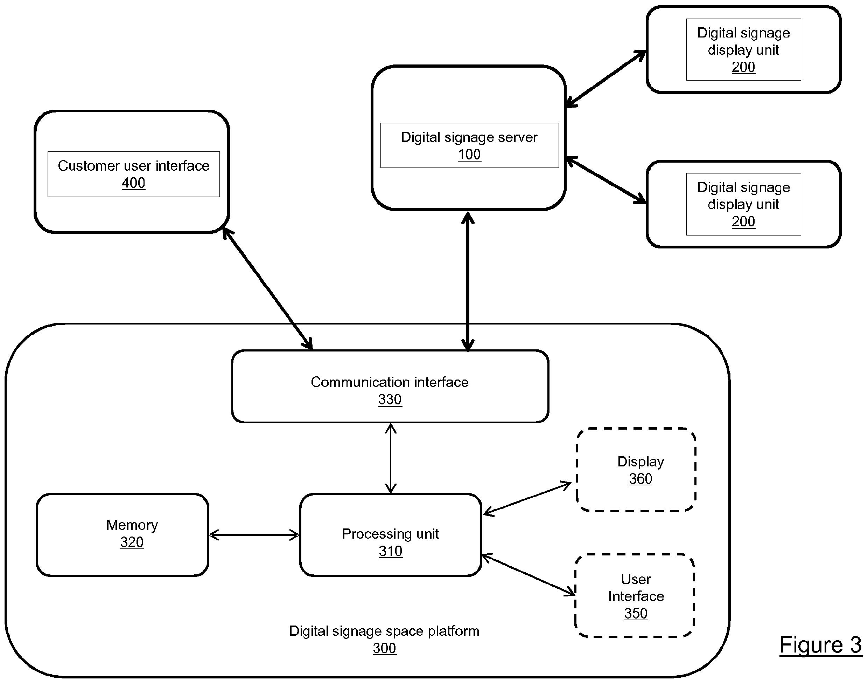

Referring now to Figure 3, details of a digital signage space platform 300 are illustrated. For simplification purposes, the digital signage space platform 300 will be referred to as the platform 300 through the remainder of the description. The platform 300 allows a customer to purchase digital signage space for displaying a digital signage content on one or more digital signage display units 200 controlled by one or more digital signage servers 100. The platform 300 is implemented by a computing device, such as a computer, a laptop, a server, etc. Alternately, the platform 300 may be located with the digital signage server 100, or some functionalities of the platform 300 may be performed by the digital signage server 100.

The platform 300 comprises a processing unit 310. The processing unit 310 comprises one or more processors (not represented in Figure 3) capable of executing instructions of computer program(s)) for performing the functionalities of the platform 300 (receiving data, processing the received data, generating data, transmitting the generated data, etc.). Each processor may further have one or several cores.

The platform 300 comprises memory 320. The memory 320 stores instructions of the computer program(s) executed by the processing unit 310, data generated by the execution of the computer program(s), data received from a communication interface 330, etc. The platform 300 may comprise several types of memories, including volatile memory, non-volatile memory, etc.

The platform 300 comprises the communication interface 330. The communication interface 330 allows the platform 300 to exchange data with digital signage server(s) 100, with customer user interface(s) 400, and with other computing devices if needed. The communication interface 330 supports at least one of the following communication technologies: fixed broadband, cellular, Ethernet, Wi-Fi, mesh, Bluetooth, a combination thereof, etc. For example, the platform 300 communicates with the customer user interface 400 via a cellular network, and communicates with the digital signage server 100 via a fixed broadband network.

The platform 300 may also comprise a user interface 350 (e.g. a keyboard, a mouse, a touchscreen, etc.), and a display 360 (e.g. a standard screen, a touchscreen, etc.).

One digital signage server 100 and two digital signage display units 200 under the control of the digital signage server 100 are represented in Figure 3, and correspond to those previously described with reference to Figure 1. However, the platform 300 is not limited to interacting with only one digital signage server 100 and two digital signage display units 200, and could interact with several digital signage servers 100 and several digital signage display units 200 concurrently.

A customer user interface 400 is also represented in Figure 3. The customer user interface 400 is used by a customer to interact with the platform 300 for purchasing digital signage space. The customer user interface 400 is a computing device consisting of any of the following: a computer, a smartphone, a tablet, etc. An example of a customer using the customer user interface 400 is a marketing manager of a marketing agency using a website providing the customer user interface. The marketing agency is in charge of managing the placement of digital signage content for a plurality of its clients.

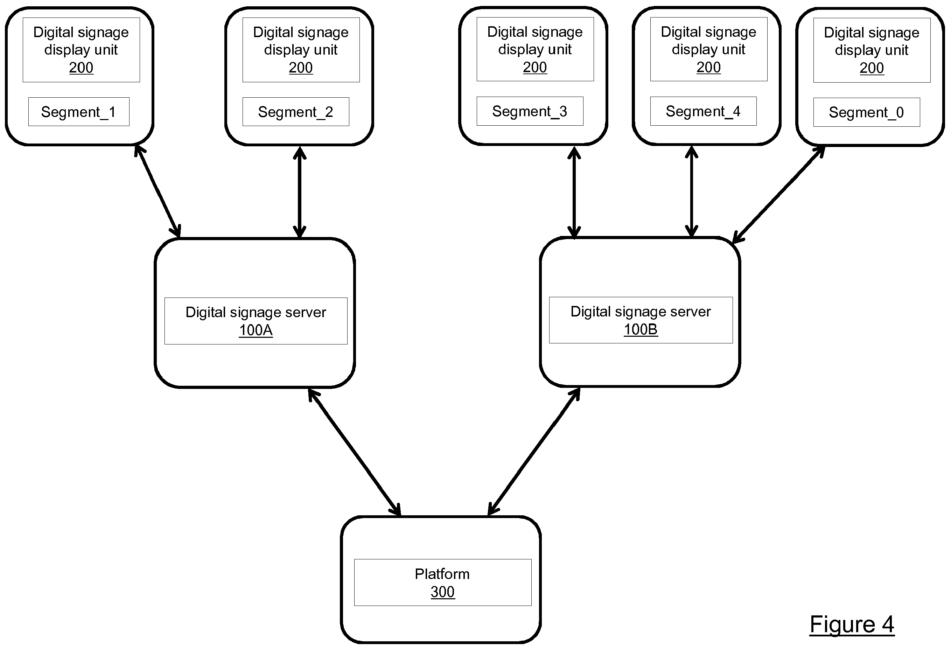

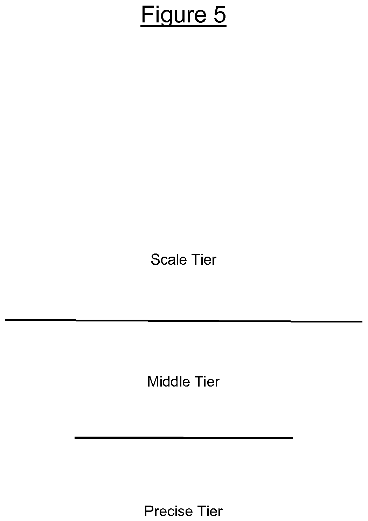

Figure 4 illustrates an exemplary configuration with a plurality of audience segments corresponding to a plurality of digital signage display units 200. The platform 300 is responsible for managing the purchase of digital signage space for the placement of digital signage content on digital signage display units 200 under the control of two digital signage servers 100A and 100B. Digital signage server 100A has two digital signage display units 200 under its control, with corresponding audience segments (segment_1 and segment_2). Digital signage server 100B has three digital signage display units 200 under its control, with corresponding audience segments segment_3, segment_4 and segment_0. The number of digital signage servers under the control of the platform 300 may vary, and is not limited to two as illustrated in Figure 5. Similarly, the total number of digital signage display units under the control of the platform 300 may vary. Additionally, for each digital signage server (e.g. 100A or 100B) managed by the platform 300, only a subset of the digital signage display units 200 may be managed by the platform 300 with corresponding audience segments.

As mentioned previously, the audience segments (segment_1, segment_2, segment_3, segment_4 and segment_0) are stored in the memory 320 of the platform 300 and/or of the digital signage server 100. When the audience segments are stored in the memory 320 of the platform, the following information is typically stored for each particular audience segment: an identifier of the corresponding particular digital signage display unit 200, and an identifier of the digital signage server (e.g. 100A or 100B) controlling the particular digital signage display unit 200 are also stored in the memory 320.

Examples of data included in an audience segment comprise at least one of the following: data related to a gender of the audience, data related to an age range of the audience, data related to a salary range of the audience, data related to a profession of the audience, data related to a domain of interest of the audience, data related to a geographical area where the corresponding particular digital signage display unit 200 is located, data related to propensity, data related to a monetary value of the audience segment, etc. The monetary value of the audience segment may be established in any of the following manner: based on bids currently received from customers for the audience segment, based on an average price charged to customers for the audience segment, based on the highest bid received from a customer for the audience segment, based on the minimum bid requested by the operator for the audience segment, based on a fixed price set by the operator, based on a "dynamic floor" algorithm that can adjust the minimal bid floor price to capture maximum yield, etc.

A person skilled in the art of digital marketing would readily understand that additional categories of data may be included in an audience segment or be the object of additional audience segments. The previously mentioned categories of data are for illustration purposes only, and are not aimed at limiting the scope of the audience segments which can be generated and used.

The level of accuracy of audience segments varies, based on the data available to generate the audience segment. Figure 5 illustrates three types of tiers for the audience segments. A scale tier is an audience segment for which no precise audience data is available. The audience data has a big reach (i.e. lots of impressions) but a poor targeting (i.e. no precise audience data such as gender/age range, etc.). For example, a scale tier is based on traffic car counts on a highway. A middle tier is an audience segment for which audience data are available but limited in number and / or precision, so that the accuracy of the audience segment is limited. For example, a middle tier is based on audience video analytics, camera-based facial recognition, etc. A precise tier is an audience segment for which precise audience data are available (e.g. domains of interest of the audience, purchase habits of the audience, etc.), so that the accuracy of the audience segment is high. Typically, the audience data has a precise targeting, but lacks reach (raw impressions). For example, a precise tier is based on Mobile Exchange bid stream data. Thus, a scale tier provides no representation at all of the audience of the corresponding digital signage display unit 200. A middle tier provides a somewhat limited representation of the audience of the corresponding digital signage display unit 200. A precise tier provides an accurate representation of the audience of the corresponding digital signage display unit 200. Although three types of tiers have been described for illustration purposes, any number of types of tiers may be defined, based on the level of granularity required.

**Table 1**

| | Segment_1 | Segment_2 | Segment_3 | Segment_4 |
|---|---|---|---|---|
| Gender | x % male | x % male | x % male | x % male |
| Age range | 15-65 | 35-55 | 18-25 | 5-40 |
| | | | 30-60 | |
| Salary range | Unknown | Unknown | 10-20k | 30-60k |
| | | | 70-130k | |
| Profession | Unknown | Unknown | Student Teacher | Unknown |
| Domain of interest | Travel | Travel Business | Education Leisure Sports | Unknown |
| Geographical area | Airport National flights | Airport International flights | University | City / Street |

Table 1 illustrates a plurality of exemplary audience segments. Each audience segment corresponds to one of the particular digital signage display units 200 represented in Figure 4, and is representative of an audience of the particular digital signage display unit 200. The audience segments include data for at least some of the previously mentioned categories of data (gender, age range, salary range, profession, domain of interest, geographical area).

Some of the audience segments have no data for one or more categories of data, if such data cannot be collected, or if the accuracy of the collected data is not sufficient to be used. Furthermore, the level of precision and accuracy of the data related to a particular category of data may vary from one audience segment to another. The categories of data will also be referred to as items in the rest of the description, for simplification purposes.

Segment_1 corresponds to a digital signage display unit 200 located in an airport (item geographical area), and more particularly in a national flights area in the airport. Segment_1 is qualified as a middle tier, since data are missing for only two items (salary range and profession).

Segment_2 corresponds to a digital signage display unit 200 located in the same airport (item geographical area), and more particularly in an international flights area in the airport. Segment_2 is qualified as a middle tier, since data are missing for only two items (salary range and profession).

Segment_3 corresponds to a digital signage display unit 200 located in or close to a university (item geographical area). Segment_3 is qualified as a precise tier, since data are provided for all items.

Segment_4 corresponds to a digital signage display unit 200 located on a particular street (or intersection between two streets) in a particular city (item geographical area). Segment_4 is qualified as a middle tier, since data are missing for only two items (profession and interest).

Segment_0 has not been represented in Table 1 for simplification purposes. It is an audience segment for which no data at all are available. Segment_0 is qualified as a scale tier, since data are missing for all items.

As illustrated in Table 1, a particular item contains no data (e.g. salary range for segment_1), one piece of data (e.g. age range for segment_1), or several pieces of data (e.g. gender for segment_1 or domain of interest for segment_3). Furthermore, the format of the data depends on each specific item (a range of values for the age or the salary, percentages for the gender, at least one value among a list of predefined values for the profession or the domain of interest, etc.).

A single audience segment may correspond to several (at least two) corresponding digital signage display units 200 located in a same geographical area. The single audience segment is representative of the audience of all the corresponding digital signage display units 200 taken in combination. For example, a single audience segment may be generated in place of segment_0 and segment_1 illustrated in Table 1. The single audience segment is representative of both the national and international flight areas in the airport. However, the accuracy obtained with the single audience segment is potentially lower than the accuracy obtained with the two separate audience segments segment_1 and segment_2.

The audience segments may be time dependant. For example, one or several display units 200 may have several audience segments, each audience segment corresponding to a period of time (e.g. day of the week, time of day, etc.).

The audience segments may be generated by one or more third party computing devices not represented in Figure 3, transmitted to the platform 300 and/or the digital signage server 100, to be stored in the memory. Alternatively, the audience segments may be generated directly by the processing unit 310 of the platform 300, based on information received via the communication interface 330 from at least one third party computing device.

The information for generating the audience segments may come from several sources. For example, in the case of segment_1 and segment_2 represented in Table 1, the airport authorities collect information about the travellers visiting the airport, which are used to generate data for at least some of the items of segment_1 and segment_2. Similarly, the university authorities collect information about the teachers and the students, which are used to generate data for at least some of the items of segment_3 represented in Figure 1. With respect to segment_4 represented in Figure 1, the city authorities collect information about the persons living in various neighborhoods of the city, which are used to generate data for at least some of the items of segment_4.

Furthermore, digital signage display unit(s) 200 may be capable of interacting directly with a computing device (e.g. a smartphone or a tablet) of a person in close vicinity of the digital signage display unit 200, via a short range communication protocol (e.g. Bluetooth®, Wi-Fi, NFC, etc.). The interaction is used to collect information about the person, available on the computing device. The information is used to generate data for at least some of the items of the audience segment associated to the digital signage display unit 200. Alternatively, the digital signage display unit 200 does not interact directly with the computing device of the person. Rather, geo-localization data gathered by the computing device of the person are analyzed to determine that the person has been in close vicinity of the digital signage display unit 200. Information collected about this person by various means known in the art (e.g. web analytics information related to the browsing habits of the person, cell-phone trackers, Wi-Fi sniffers, audience surveys, transit card swipes, ticket plane swipes, etc.) is used to generate data for at least some of the items of the audience segment associated to the digital signage display unit 200. The number of times the person has been in close vicinity of the digital signage display unit 200 can be used as a weighting factor for the relevancy of the collected information used to generate the audience segment.

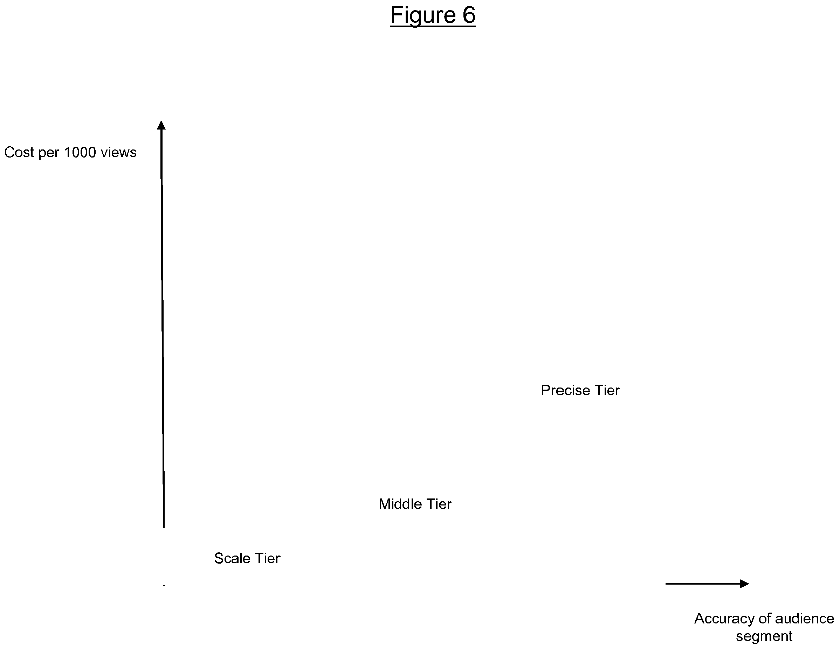

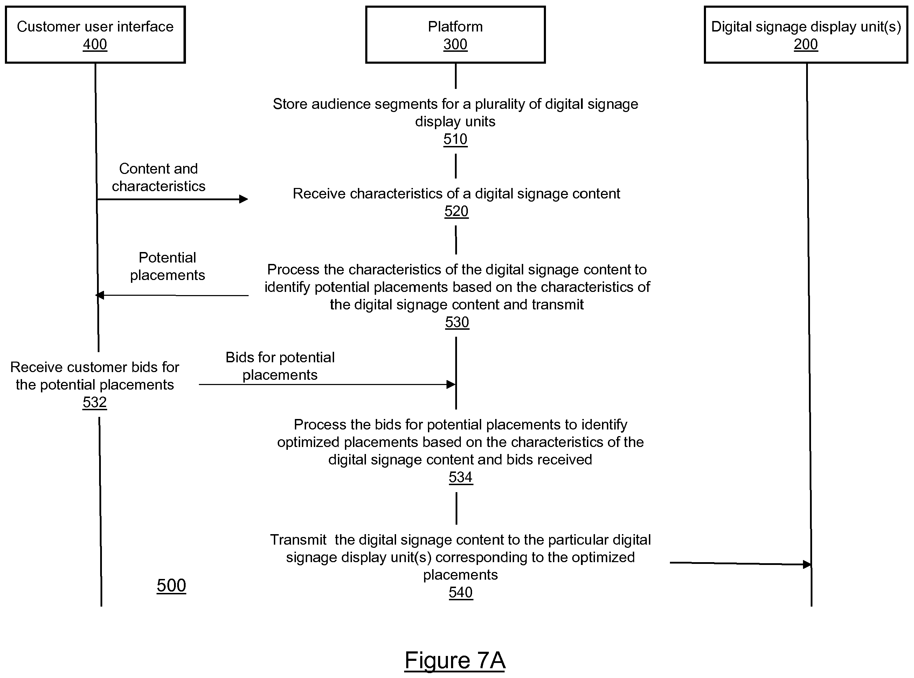

Referring now concurrently to Figures 3, 4, 5 and 6, a first embodiment of a method 500 for optimizing placement of digital signage content based on audience segments associated to digital signage display units and bids received is illustrated in Figure 7A. The first embodiment of the method 500 is implemented by the platform 300 represented in Figure 3.

A specific computer program has instructions for implementing the steps of the method 500. The instructions are comprised in a non-transitory computer program product (e.g. the memory 320). The instructions provide for optimizing placement of digital signage content based on audience segments and bids received according to the method 500, when executed by the processing unit 310 of the platform 300. The instructions are deliverable via an electronically-readable media, such as a storage media (e.g. a USB key), or via communication links (e.g. a Wi-Fi or cellular network) through the communication interface 330 of the platform 300.

The method 500 comprises the step 510 of storing in the memory 320 of the platform 300 a plurality of audience segments. Some or all of the digital signage display units 200 under the direct or indirect control of the platform 300 comprise an audience segment. Each audience segment comprises data related to an audience of the particular digital signage display unit 200. The term audience refers to the persons who come in a sufficiently close vicinity of the particular digital signage display unit 200, to be able to view digital signage content displayed on the particular digital signage display unit 200.

The method 500 comprises the step 520 of receiving by the platform 300 content and characteristics of a digital signage. Figure 3 illustrates interaction of users of the customer user interface 400 with the platform 300 via the communication interface 330 of the platform 300. For example, the platform 300 hosts a web portal allowing purchase of digital signage space. The user (for example a customer) of the customer user interface 400 interacts with the web portal hosted by the platform 300 (in a manner well known in the art of web browsing), to provide the digital signage content and define the characteristics of the digital signage content. Alternatively, the user of the platform 300 (which could be an operator of the digital signage infrastructure) provides the digital signage content and defines the characteristics of the digital signage content via the user interface 350 of the platform 300. For example, an application executed by the processing unit 310 displays a Graphical User Interface (GUI) on the display 360 of the platform 300. The displayed GUI allows the operator of the platform 300 to define the characteristics of the digital signage content through interactions with the GUI via the user interface 350. Instructions for defining the characteristics of the digital signage content are provided to the operator of the platform 300 by a customer via a phone call, or any other relevant means.

Examples of characteristics of the digital signage content comprise at least one of the following: a target gender, a target age range, a target salary range, a target profession, a target domain of interest, a target geographical area, recently or commonly visited locations, purchase history, etc. A person skilled in the art of digital marketing would readily understand that additional categories of target data may be included in the characteristics of the digital signage content. The previously mentioned categories of target data are for illustration purposes only, and are not aimed at limiting the scope of the characteristics of the digital signage content which can be defined.

The characteristics of the digital signage content aim at characterizing an audience potentially interested in viewing the digital signage content, and providing information for identifying potential placements of the content. If N categories of target data are available, information are provided for all of them, or only for a subset of them. For example, for a first digital signage content, only data related to a target gender and a target age range are provided. For a second digital signage content, data related to all categories of target data (gender, age, salary, profession, domain of interest and geographical area) are provided. Furthermore, for a specific category of target data, the precision of the information provided may vary. For example, the target age range for the first digital signage content is set to 15-55 (not precise), while the target age range for the second digital signage content is set to 20-30 (more precise). The number of categories of target data for which information is provided, as well as the level of precision of the information provided for each category of target data, determines the level of precision in the characterization of the audience potentially interested in viewing the digital signage content.

The characteristics of the digital signage content may further comprise one or several of the following: a budget for the digital signage content, a minimum number of display of the digital signage content, a minimum frequency at which the digital signage content is to be displayed, a geographical area in which the digital signage content it to be displayed, a time of day at which the digital signage content is to be displayed, and/or a minimum number of daily viewers for the display of the digital signage content.

In the following, it will be described how the characteristics of the digital signage content are compared to the aforementioned audience segments, for identifying potential placements for the digital signage content over one or several digital signage display units for displaying the digital signage content.

The method 500 comprises the step 530 of processing, by the processing unit 310 of the platform 300, the characteristics of the digital signage content (received at step 520) and the plurality of audience segments (stored at step 510), to identify potential placements for the digital signage content based on its characteristics among the plurality of audience segments. The identification of the target audience segment(s) comprises determining at least one audience segment among the plurality of audience segments matching the characteristics of the digital signage content.

The identification of the potential placements of the digital signage content depends on parameters of a matching algorithm executed by the processing unit 310. For example, the data for each specific item of a particular audience segment are compared to the characteristics of the content, to determine if a partial match is obtained for this specific item. If no data are provided for the specific item, a partial match is obtained by default. Then, a global match for the particular audience segment is determined, based on the partial matches obtained for each specific item. For example, a global match for the particular audience segment is obtained only if a partial match is obtained for all of the items. Alternatively, a global match for the particular audience segment is obtained only if a partial match is obtained for a pre-defined percentage (e.g. 50%) of the items.

Referring more particularly to segment_3 of Table 1, examples of the determination of partial matches for each item of the audience segment will be provided.

For example, with respect to the gender, a partial match is obtained if the gender characteristics of the content correspond to the audience segment with a margin of plus or minus 20%. In this example, if the male proportion for segment_3 is set to 50% and the characteristics of the content are 80% male, a partial match is not obtained (not within 30 to 70%); and if the characteristics of the content are 65% male, a partial match is obtained (within 30 to 70%).

In another example with respect to the age range, a partial match is obtained if the characteristics of the content have at least one age range overlapping with an age range of the audience segment. For example, if the characteristics of the content comprise an age range of 20-30, a partial match is not obtained (no overlap with 18-25 or 30-60); while if the characteristics of the content comprise an age range of 40-50, a partial match is obtained (overlap with 30-60).

With respect to the salary range, a partial match is determined in a similar manner as for the age range.

With respect to the profession, a partial match is obtained if the characteristics of the content have at least one profession corresponding to a profession of the audience segment. For example, if the characteristics of the content comprise the professions dentist and surgeon, a partial match is not obtained (no correspondence with student or teacher). If the characteristics of the content comprise the professions teacher and engineer, a partial match is obtained (correspondence with teacher).

With respect to the domain of interest, a partial match is determined in a similar manner as for the profession.

With respect to the geographical are, a partial match is obtained only if the characteristics of the content correspond exactly to those of the audience segment. For example, if the characteristics of the content comprise the geographical areas airport and shopping mall, a partial match is not obtained (no correspondence with university). If the characteristics of the content comprise the geographical areas university and public library, a partial match is obtained (correspondence with university).

For illustration purposes, a global match is obtained if 50% of partial matches have been obtained. For example, if characteristics of a content match with the gender, age range, salary range and profession of segment_3, a global match is obtained for segment_3 (66% of partial matches obtained). But if characteristics of a content match only with the salary range and profession of segment_3, a global match is not obtained for segment_3 (only 33% of partial matches obtained).

The matching algorithm may attribute weighting factors to the items of the audience segments, to increase the importance of specific items with respect to other items. For example, the gender and age range have a weighting factor of 1, the salary range and profession have a weighting factor of 2, the domain of interest has a weighting factor of 3, and the geographical area has a weighting factor of 1. The determination of the global match takes into consideration the weighting factors allocated to each partial match (global match = 1 * gender match + 1 * age match + 2 * salary match + 2 * profession match + 3 * domain of interest match + 1 * geographical match, each partial match is worth 1, the global match varies between 0 and 10, a global match is reached for a global match value of 5 or more). The weighting factors may be configurable by the operator of the platform 300, or provided as characteristics of the digital signage content.

The matching algorithm may be configurable so that it does not take into consideration some of the items of the audience segments, when matching the characteristics of the content with the audience segments. For example, the geographical area (e.g. university in segment_3) is not taken into consideration and a geographical partial match is not determined. In this case, the geographical area is not a criterion taken into consideration for determining an audience potentially interested in viewing the content.

If the characteristics of the content do not include a target for one or more items of the audience segments, these items are considered to be matched by any of the audience segments. For example, and referring again to Table 1, if the characteristics of the content include a target only for the age range, the profession and the domain of interest, a partial match is determined only for these items, and a partial match is allocated by default for the items gender, salary range and geographical area.

The method further identifies potential placements for the digital signage content in step 530 based on a budget provided by the customer. For doing so, the customer through the customer interface 400 further provides along with the characteristics content of the digital signage content a budget for the digital signage content. The budget may include any of the following, singly or in combination: a monetary value to be paid for the digital signage content, a maximum price per target audience segment for the digital signage content, an average price per target audience segment for the digital signage content, a minimum number of target audience segments for the digital signage content. In this particular embodiment of the method 500, the platform 300 uses the budget to identify the potential placements of the digital signage content. By comparing the budget received with the characteristics of the digital signage content in step 520 and the monetary value of the audience segments, the platform identifies potential placements which correspond to the desired audience segment and the customer's budget.

The method comprises sending the potential placements for the digital signage content to the customer user interface 400. The customer user interface 400 allows the customer to bid 532 on the potential placements for the digital signage content. The customer may bid 532 on some or all of the potential placements for the digital signage content. Bidding may be entered on a per audience segment, on a per audience segment for specific digital signage display unit(s), on a per audience segment for a geographical area comprising multiple digital signage display units, etc. Each bid may comprise a minimum bid for an audience segment, a bid increment for an audience segment, a maximum bid for an audience segment, a frequency capping, a budget spread over time, an adaptive bidding based on supply patterns, etc. The bids for the potential placements are transmitted from the customer user interface 400 to the platform 300.

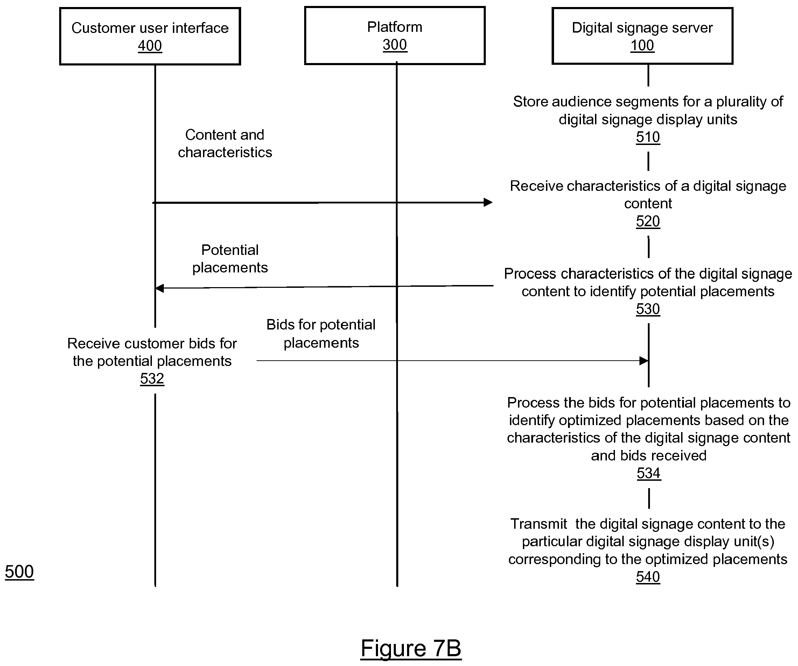

The method 500 comprises the step 534 of receiving the bids for the potential placements from the customers through the customer user interface 400. Although Figures 7A and 7B depict only one instance of bids for potential placements being received by the platform 300, people skilled in the art of marketing and digital signage will understand that the platform 300 concurrently receives several bids for potential placements from multiple customers through the customer user interface. Some of the potential placements for which bids are received may correspond to potential placements presented to many customers in step 530 for different digital signage content.

The method 500 also comprises processing, by the processing unit 310 of the platform 300, the bids received for the potential placements to identify optimized placements 534 based on the characteristics of the digital signage content and bids received.

For example, a digital signage display unit with available digital signage space matches several types of audience segments (e.g. scale, middle and precise tiers) simultaneously. The platform 300 receives several bids from several customers, each bid including a targeted type of audience segment (e.g. middle tier) and bids. The platform 300 identifies the optimized placement of the digital signage content based concurrently on the characteristics of the digital signage content and the bids received for the audience segment. Thus the platform 300 identifies optimized placements of the digital signage content based on an analysis of the bids (targeted type of audience segment and budget spending constraints) and the available types of audience segments for the digital signage display units. Following is an example of such an analysis performed by the platform 300.

Three types of audience segments are offered for bidding for digital signage spaces available at a particular digital signage display unit. The scale tier of the particular digital signage display unit indicates that there are 20 people in front of the screen of the particular digital signage display unit. The medium tier of the digital signage display indicates that there are 4 males and 6 females in front of the screen (the gender of the 10 other people in front of the screen cannot be determined). The precise tier of the digital signage display unit indicates that there is one lawyer and one soccer mom in front of the screen (the occupation of the 18 other people in front of the screen cannot be determined).

More particularly, with respect to the monetary value of the digital signage space corresponding to audience segments, the cost of the digital signage space may be defined as a "price per N views", for example "10$ per 1000 views". In the context of digital signage, one view corresponds to one display of the digital signage content on the screen(s) of a particular digital signage display unit 200 for a predetermined frequency of displaying and period of time.

The platform 300 receives three bids from three potential customers for the available digital signage space on the digital signage display unit. Customer 1 offers 4$ Cost per thousand (CPM) for no targeting (scale tier). Customer 2 offers 10$ CPM for female impressions (medium tier). Customer 3 offers 25$ CPM for targeting lawyer(s) (precise tier). For customer 1, the potential cost for the customer (or revenue for the operator) is 4 * 20 (20 people in front of the screen) / 1000 = 0.08$. For customer 2, the potential cost for the customer (or revenue for the operator) is 10 * 6 (6 females in front of the screen) / 1000 = 0.06$. For customer 3, the potential cost for the customer (or revenue for the operator) is 25 * 1 (1 lawyer in front of the screen) / 1000 = 0.025$. Based on the analysis of the received bids for the potential placements and the characteristic of the digital signage content, the platform 300 determines that the best yield is to accept the bid from customer 1. By accepting the bid from customer 1, the platform 300 optimizes the placement and yield of the digital signage audience segment as a function of the bids received for each audience segment of the same digital signage display unit.

The method 500 comprises the step 540 of transmitting to the digital signage display unit(s) 200 identified for the optimized placement of the digital signage content in step 534, via the communication interface 330 of the platform 300, the digital signage content and the corresponding optimized placement (identified audience segments, period of display, frequency, monetary value). For each specific target audience segment identified at step 534, the digital signage display unit(s) 200 control(s) display of digital signage in accordance with the optimized placement determined in step 534.

As mentioned previously, for each target audience segment identified at step 534 in the optimized placement of the digital signage content, an identifier of the corresponding particular digital signage display unit 200 and an identifier of the target digital signage server 100 controlling display of content on the particular digital signage display unit 200 have been stored in the memory 320. The identifier of the target digital signage server 100 is used for the transmission of data (e.g. the identifier of the corresponding particular digital signage display unit 200) from the platform 300 to the target digital signage server 100. For example, the identifier of the target digital signage server 100 is an Internet Protocol (IP) address of the target digital signage server 100. Alternatively, the identifier of the target digital signage server 100 is an identifier (e.g. Domain Name Server (DNS) name) which can be mapped to the IP address of the target digital signage server 100. The identifier of the corresponding particular digital signage display unit 200 is used by the target digital signage server 100 to determine which one of the plurality of digital signage display units under its control shall display the digital signage content for which the characteristics have been received at step 520.

For example, and referring to Figure 4, if the audience segments segment_2 and segment_4 have been identified at step 534, the platform 300 transmits at step 540: the identifier of the particular digital signage display unit 200 (second from the left on Figure 4) corresponding to segment_2 to the target digital signage server 100A; and further transmits the identifier of the particular digital signage display unit 200 (fourth from the left on Figure 4) corresponding to segment_4 to the target digital signage server 100B.

The method 500 further comprises the step 550 of transmitting to the target digital signage server 100, via the communication interface 330 of the platform 300, the digital signage content to be displayed on the particular digital signage display unit 200 corresponding to the identifier sent at step 540, and the optimized placement conditions.

Although not represented in Figure 7A for simplification purposes, the target digital signage server 100 may control display of the digital signage content transmitted at step 540 on the particular digital signage display unit 200, as is well known in the art of digital signage. The digital signage content transmitted at step 540 includes the characteristics of the digital signage content received at step 520 from the customer user interface 400. Alternatively, the characteristics of the digital signage content received at step 520 from the customer user interface 400 includes an identifier of the digital signage content (and not the digital signage content itself), which is transmitted (in place of the digital signage content itself) at step 540. In this case, the digital signage content (along with its identifier) are transmitted from the customer user interface 400 to the target digital signage server 100 by means not involving the platform 300. Furthermore, in this case, the method 500 includes an additional step (not represented in Figure 7A) consisting in transmitting the identifier of the target digital signage server 100 to the customer user interface 400 (after step 534).

Reference is now made to Figure 7B, which depicts another embodiment of the present method. In this second embodiment, the digital signage platform is executed directly by the digital signage server 100. Thus the customer user interface 400 communicates through the platform 300 on the digital signage server 100, and sends thereto the digital signage content and characteristics. The method stores the audience segments for the plurality of the digital signage display units 200 directly in the memory of the digital signage server 100. The digital signage server 100 receives in step 520 the digital signage content and characteristics from the customer user interface 400 as previously described. The digital signage server 100 then processes in step 530 the characteristics of the digital signage content to identify potential placement for the digital signage content as a function of the characteristics provided therefor and the stored audience segments. The method further transmits from the digital signage server 100 the potential placements to the customer user interface 400. The method also receives from the customer user interface bids for potential placements. The method further processes 534 in the digital signage server 100 the bids for potential placements of the digital signage content based on the characteristics of the digital signage content and the bids received. The method also transmits from the digital signage server 100 in step 540 the digital signage content (or an identifier as previously described) to the particularly digital signage display unit(s) 200 corresponding to the identified optimized placement in step 534.

### POTENTIAL PLACEMENTS VS. OPTIMIZED PLACEMENTS

Throughout the present specification, the expressions 'potential placement' and 'optimized placement' are used to refer to placement of digital signage content over a plurality of digital signage display units 200 based on the characteristics of the digital signage content.

Potential placements correspond to digital signage display units which have audience segments corresponding to the characteristics provided for the digital signage content.

Furthermore, potential placements may further filter the digital signage display units and their corresponding audience segments based on a budget provided for the digital signage content. The budget is received at step 520 by the platform 300, along with the characteristics of the digital signage content.

Since each particular digital signage display unit 200 has corresponding audience segment(s) providing information about the audience of the particular digital signage display unit 200, the cost is customized for each specific audience segment.

Thus the potential placements received at the customer user interface 400 includes the digital signage display units which have audience segments corresponding to the characteristics provided for the digital signage content and when provided the provided budget.

The customer purchasing digital signage content space may implement several strategies for spending its allocated budget by selecting corresponding characteristics for the digital signage content. For example, a strategy could consist in preferably selecting a large number of digital signage display units 200 having a lower cost associated to their corresponding audience segments (scale tier and optionally middle tier segments). With this strategy, quantity (number of views) is favored over quality (accuracy of audience segments for which the views will occur). Another exemplary strategy could consist in selecting a small number of digital signage display units 200 having a higher cost associated to their corresponding audience segments (precise tier and optionally middle tier segments). With this strategy, quality (accuracy of audience segments for which the views will occur) is favored over quantity (number of views). A person skilled in the art of digital marketing will readily understand that other types of strategies may be implemented.

The selection of the potential placements (at step 530) further takes into consideration the allocated budget, and a strategy for applying the allocated budget based on the expected cost of the audience segments. The strategy (selected by the user of the customer user interface 400) is received at step 530 by the platform 300, along with the characteristics of the digital signage content.

For instance, in a first stage, potential placements matching the strategy for spending the allocated budget are pre-selected (e.g. a larger number of potential placements having a lower cost and a lower level of accuracy, or a smaller number of potential placements having a higher cost and a higher level of accuracy). In a second stage, the potential placements are compared to the characteristics of the digital signage content to find matching audience segments (this second stage has been previously detailed when describing step 530 in relation to Figure 4).

The selection process implemented at step 530 may further take into consideration requirements related to parameters of the potential placements where the digital signage content is to be displayed. These requirements are transmitted at step 520, along with the characteristics of the digital signage content. For example, the requirements related to the parameters of each potential digital signage display unit 200 include at least one of the following: a specific geometry of the screen(s) of the potential digital signage display unit 200, a specific area of the screen(s) where the content is to be displayed, time availabilities for displaying the content on the potential digital signage display unit 200, a personalization of the viewer level, etc. For each audience segment stored at step 510, parameters of the corresponding digital signage display unit 200 are also stored. The selection process implemented at step 530 includes comparing the stored parameters with the requirements related to the parameters. For example, the selection process implemented at step 530 includes a first stage where candidate digital signage display unit(s) 200 corresponding to the stored audience segments are selected based on the characteristics of the digital media content, and a second stage where the candidate digital signage display unit(s) 200 are further filtered based on the requirements related to the parameters of the candidate digital signage display unit(s) 200.

Optimized placement refers to displaying the digital signage content in accordance with the characteristics (and budget if provided) for the digital signage content, which provides the best yield.

The determination of the optimized placement by the processing unit 310 comprises receiving bids (step 534) for potential placements, each potential placement corresponding to an audience segment (e.g. scale tier, middle tier, and precise tier) of one or several digital signage display unit(s), via the communication interface 330. The bids are then analyzed in view of the characteristics of the corresponding digital signage content and stored audience segments. The bids are then converted into yield, based on the number of corresponding views for each audience segment.

For example, the platform 300 receives three bids from three potential customers for three potential placements corresponding to the same digital signage space on the digital signage display unit. Customer 1 offers 4$ Cost per thousand (CPM) for no targeting (scale tier). Customer 2 offers 10$ CPM for female impressions (medium tier). Customer 3 offers 25$ CPM for targeting lawyer(s) (precise tier). For customer 1, the potential cost for the customer (or revenue for the operator) is 4 * 20 (20 people in front of the screen) / 1000 = 0.08$. For customer 2, the potential cost for the customer (or revenue for the operator) is 10 * 6 (6 females in front of the screen) / 1000 = 0.06$. For customer 3, the potential cost for the customer (or revenue for the operator) is 25 * 1 (1 lawyer in front of the screen) / 1000 = 0.025$. Based on the analysis of the received bids for the potential placements and the characteristic of the digital signage content, the platform 300 determines that the best yield is the bid from customer 1. By selecting the bid from customer 1, the platform 300 optimizes the placement and yield of the digital signage audience segment as a function of the bids received for multiple audience segments of the same digital signage display unit.

Optimized placement is achieved when one or several of the following are met: the digital signage content is displayed in accordance with the characteristics provided for the digital signage content providing the best yield in view of all bids received for the digital signage display unit, the digital signage content is displayed in accordance with the characteristics and budget provided for the digital signage content providing the best yield in view of all bids received for the digital signage display unit, the digital signage content is displayed in a selected geographical area over a predetermined period of time in accordance with the characteristics of the digital signage content, budget provided, and best yield in view of all bids received for the digital display unit, the digital signage content is displayed only on the digital signage display units in a selected geographical area only for the audience segments selected in accordance with the characteristics provided for the digital signage content and providing the best yield in view of all bids received for the digital signage display units, the digital signage content is displayed only when a certain environment trigger or condition is activated in accordance with the characteristics of the digital signage content while providing the best yield in view of all bids received for the digital signage display unit, the digital signage content is displayed only when competitor exclusivity rules allow it in accordance with the characteristics of the digital signage content while providing the best yield in view of all bids received for the digital signage display unit, etc.

The functionalities of the platform 300 can be integrated with an existing media content space platform in charge of selling media content space (e.g. advertising space) on at least one of the following supports: fixed and / or mobile web sites, Internet videos, social media, mobile applications, etc. Such an integrated platform provides the ability to implement an optimized multi-support placement strategy for a media content, for instance combining digital signage advertising with the aforementioned other forms of advertising (e.g. Internet videos advertising and mobile applications advertising).

Although the present disclosure has been described hereinabove by way of non-restrictive, illustrative embodiments thereof, these embodiments may be modified at will within the scope of the appended claims without departing from the spirit and nature of the present disclosure.

## Claims

1. A method for optimizing placement of digital signage content based on audience segments of digital signage display units, the method comprising
storing in a memory of a computing device audience segments of digital signage display units;
receiving by the computing device characteristics of a digital signage content from a customer user interface;
processing by a processing unit of the computing device characteristics of the digital signage content and the plurality of audience segments to identify potential placements for the digital signage content based on the digital signage characteristics;
transmitting the potential placements for the digital signage content to the customer user interface;
receiving by the computing device bids for the potential placements for the digital signage content from the customer user interface; and
processing the bids for the potential placements to identify optimized placements for the digital signage content based on the characteristics of the digital signage content and bids received.

2. The method of claim 1, wherein the audience segment comprises at least one of the following: data related to a gender of the audience, data related to an age range of the audience, data related to a salary range of the audience, data related to a profession of the audience, data related to a domain of interest of the audience, and data related to a geographical area where the corresponding particular digital signage display unit is located.

3. The method of claim 1, wherein at least one of the audience segments corresponds to a plurality of digital signage display units located in a same geographical area.

4. The method of claim 1, wherein the characteristics of the digital signage content comprise at least one of the following: a target gender, a target age range, a target salary range, a target profession, a target domain of interest, and a target geographical area.

5. The method of claim 1, wherein a monetary value is determined for each of the plurality of audience segments by the processing unit of the computing device, the monetary value of a specific audience segment being determined based on a level of accuracy of the specific audience segment, the monetary value being higher for a higher level of accuracy and lower for a lower level of accuracy.

6. The method of claim 5, wherein the selection of the at least one target audience segment further takes into consideration a budget, the monetary value of each audience segment, and a strategy for optimizing placement of the digital signage content based on the budget and the monetary value of the audience segments.

7. The method of claim 6, wherein the strategy for optimizing the budget consists in one of the following: selecting audience segments having a lower cost and a lower level of accuracy, and selecting audience segments having a higher cost and a higher level of accuracy.

8. The method of claim 1, wherein the selection of the at least one target audience segment further takes into consideration requirements related to parameters of the digital signage units corresponding to the audience segments, the parameters including at least one of the following: a specific geometry of one or more screens of the digital signage display units, a specific area of the one or more screen where the digital signage content is to be displayed, time availabilities for displaying the digital signage content on the digital signage display units, and a personalization of a viewer level.

9. The method of claim 1, wherein the plurality of audience segments is received via the communication interface of the computing device from at least one third party computing device which generates the plurality of audience segments.

10. The method of claim 1, wherein the plurality of audience segments are generated by the processing unit of the computing device based on information received via the communication interface of the computing device from at least one third party computing device.

11. A non-transitory computer program product comprising instructions deliverable via an electronically-readable media such as storage media and communication links, the instructions when executed by a processing unit of a computing device providing for optimizing placement of digital signage content based on audience segments of digital signage display units by:
storing in a memory of the computing device audience segments of digital signage display units;
receiving by the processing unit of the computing device characteristics of a digital signage content from a customer user interface;
processing by the processing unit of the computing device the characteristics of the digital signage content and the plurality of audience segments to identify potential placements for the digital signage content based on the digital signage characteristics;
transmitting the potential placements for the digital signage content to the customer user interface;
receiving by the computing device from the customer user interface bids for the potential placements for the digital signage content; and
processing the bids for to identify optimized placements for the digital signage content based on the characteristics of the digital signage content and bids received.

12. A computing device adapted for optimizing placement of digital signage content based on audience segments associated to digital signage display units, the computing device comprising:
memory for storing a plurality of audience segments of digital signage display units;
at least one of a communication interface and a user interface for receiving characteristics of a digital signage content;
a processing unit for processing the characteristics of the digital signage content and the plurality of audience segments to identify potential placements of the digital signage content based on the digital signage characteristics, the processing unit further transmitting the potential placements for the digital signage content through the at least one communication interface, the processing unit receiving through the at least one communication interface bids for the potential placements for the digital signage content, and the processing unit identifying optimized placements based on the characteristics of the digital signage content and bids received.

13. The computing device of claim 12, wherein the audience segment comprises at least one of the following: data related to a gender of the audience, data related to an age range of the audience, data related to a salary range of the audience, data related to a profession of the audience, data related to a domain of interest of the audience, and data related to a geographical area where the corresponding particular digital signage display unit is located.

14. The computing device of claim 12, wherein the characteristics of the digital signage content comprise at least one of the following: a target gender, a target age range, a target salary range, a target profession, a target domain of interest, and a target geographical area.

15. The computing device of claim 12, wherein a monetary value is determined for each of the plurality of audience segments by the processing unit, the monetary value of a specific audience segment being determined based on a level of accuracy of the specific audience segment, the cost being higher for a higher level of accuracy and lower for a lower level of accuracy.

16. The computing device of claim 15, wherein the optimized placement of the digital signage content further takes into consideration a budget, the monetary value determined for each of the plurality of audience segments, and a strategy for optimizing the budget based on the monetary value of the audience segments.

17. The computing device of claim 16, wherein the optimized placement of the digital signage content comprises: selecting audience segments having a lower cost and a lower level of accuracy, and selecting audience segments having a higher cost and a higher level of accuracy.
